# EUROPÄISCHE PATENTANMELDUNG

(11) **EP 4 496 197 A1**
(43) Veröffentlichungstag der Anmeldung: **22.01.2025**
(21) Anmeldenummer: 23186012.3
(22) Anmeldetag: 18.07.2023
(51) Int. Cl.: H02K 15/02

(54) **VERFAHREN ZUM HERSTELLEN EINES STATORS FÜR EINE ELEKTRISCHE MASCHINE MITTELS EINER HERSTELLUNGSVORRICHTUNG, STATOR SOWIE HERSTELLUNGSVORRICHTUNG**

(71) Anmelder: Siemens Aktiengesellschaft, 80333 München (DE)
(72) Erfinder: Mutzbauer, Frank, 97618 Hollstadt (DE); Vollmer, Rolf, 36129 Gersfeld (DE)
(74) Vertreter: Siemens Patent Attorneys

(57) **Zusammenfassung**

Die Erfindung betrifft ein Verfahren zum Herstellen eines Stators (10), mit den Schritten: Bereitstellen eines Statorblechs (12) für den Stator (10); (S1) Trennen des Statorblechs (12) in zumindest ein Sternblech (20) und ein Jochblech (22) mittels der Herstellungsvorrichtung (32); (S2, S3) Bereitstellen von zumindest einem weiteren Statorblech (12) für den Stator (10); (S1) Trennen des weiteren Statorblechs (12) in zumindest ein weiteres Sternblech (20) und ein weiteres Jochblech (22) mittels der Herstellungsvorrichtung (32); (S2, S3) Fügen des Jochblechs (22) und des zumindest einen weiteren Jochblechs (22) zu einem Jochblechpaket (24) und Fügen des Sternblechs (20) und des zumindest einen weiteren Sternblechs (20) zu einem Sternblechpaket (26) mittels der Herstellungsvorrichtung (32); (S4) Bereitstellen von zumindest zwei Spulen (28) an dem Sternblechpaket (26) mittels der Herstellungsvorrichtung (32); (S5) und Fügen des Jochblechpakets (24) mit dem Sternblechpaket (26) mit den Spulen (28) zu dem Stator (10) mittels der Herstellungsvorrichtung (32).

## Beschreibung

Die Erfindung betrifft ein Verfahren zum Herstellen eines Stators für eine elektrische Maschine mittels einer Herstellungsvorrichtung gemäß dem geltenden Patentanspruch 1. Ferner betrifft die Erfindung einen Stator, hergestellt mit dem Verfahren, sowie eine Herstellungsvorrichtung zum Herstellen eines solchen Stators.

Aus dem Stand der Technik ist bereits der zwei-teilige Statoraufbau bekannt, welcher eine enge Fügepassung zwischen den beiden Statorkomponenten benötigt, um eine hohe magnetische Induktion im Luftspalt zwischen dem Stator und dem Rotor zu ermöglichen. Die gedruckten und gesinterten Elektrobleche haben keine ausreichende Genauigkeit, um einerseits das Fügen sicher zu ermöglichen und andererseits einen nicht zu großen Spalt an den Fügestellen der beiden Pakete zu erzeugen.

Mit gedruckten Blechen und den großen Toleranzen sind die Spalten im Stand der Technik sehr groß gewählt. Damit sind die Drehmomente der Motoren bei kleinen Drehzahlen reduziert.

Aufgabe der folgenden Erfindung ist es, ein Verfahren zum Herstellen eines Stators, einen Stator sowie eine Herstellungsvorrichtung zum Herstellen eines Stators zu schaffen, mittels welcher ein verbesserter Stator hergestellt werden kann.

Diese Aufgabe wird durch ein Verfahren, einen Stator sowie eine Herstellungsvorrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Herstellen eines Stators für eine elektrische Maschine mittels einer Herstellungsvorrichtung. Es erfolgt das Bereitstellen eines Statorblechs für den Stator. Es wird das Statorblech in zumindest ein Sternblech und ein Jochblech mittels der Herstellungsvorrichtng getrennt. Es wird zumindest ein weiteres Statorblech bereitgestellt. Es wird das weitere Statorblech in zumindest ein weiteres Sternblech und ein weiteres Jochblech mittels der Herstellungsvorrichtung getrennt. Es erfolgt das Fügen des Jochblechs und des zumindest einen weiteren Jochblechs zu einem Jochblechpaket und das Fügen des Sternblechs und des zumindest einen weiteren Sternblechs zu einem Sternblechpaket mittels der Herstellungsvorrichtung. Es werden zumindest zwei Spulen an dem Sternblechpaket mittels der Herstellungsvorrichtung erzeugt beziehungsweise bereitgestellt. Es folgt das Fügen des Jochblechpakets mit dem Sternblechpaket mit den Spulen zu dem Stator mittels der Herstellungsvorrichtung.

Insbesondere kann somit verbessert ein Stator hergestellt werden. Insbesondere hat die Erfindung den Vorteil, dass nur ein Statorblech, was später in das Sternblech und das Jochblech getrennt wird, durch einen Druck- und Sinterprozess laufen muss. Damit wird die Durchlaufzeit beim Drucken und Sintern verkürzt und somit werden die Kosten, insbesondere die Sinterungshilfsmittel, Energie oder dergleichen eingespart.

Insbesondere ist vorgesehen, dass an jedem Zahnkopf des Sternblechs eine entsprechende Spule angebracht wird. Mit anderen Worten, je mehr Zähne das Sternblech aufweist, desto mehr Spulen werden an dem Sternblechpaket angeordnet.

Insbesondere ist somit ein Herstellungsverfahren vorgeschlagen, bei dem die Spalten an den Fügestellen der beiden Statorpakete gering gehalten sind, wodurch wiederum Drehmomente der elektrischen Maschine auch bei kleinen Drehzahlen konstant bzw. erhöht werden kann können gegenüber dem Stand der Technik.

Gemäß einer vorteilhaften Ausgestaltungsform werden die Sternbleche zueinander isoliert. Insbesondere können somit entsprechend induzierte Ströme im Sternblechpaket verhindert werden. Dies hat den Vorteil, dass keine Kriechströme entstehen und somit die Effizienz der elektrischen Maschine erhöht werden kann.

In einer weiteren vorteilhaften Ausgestaltungsform ist vorgesehen, dass die Jochbleche zueinander isoliert werden. Insbesondere können somit entsprechend induzierte Ströme im Jochblechpaket verhindert werden. Dies hat den Vorteil, dass keine Kriechströme entstehen und somit die Effizienz der elektrischen Maschine erhöht werden kann.

Weiterhin vorteilhaft ist, wenn die Sternbleche miteinander verklebt werden. Insbesondere kann der Kleber beispielsweise bereits als Isolation dienen. Auf Basis des Klebeverfahrens kann auf einfache Art und Weise das Sternblechpaket hergestellt werden.

Ferner hat es sich als vorteilhaft erwiesen, wenn die Jochbleche miteinander verklebt werden. Insbesondere kann der Kleber beispielsweise bereits als Isolation dienen. Auf Basis des Klebeverfahrens kann auf einfache Art und Weise das Jochblechpaket hergestellt werden.

Weiterhin vorteilhaft ist, wenn zeitlich nach dem Trennen das Jochblech und das Sternblech fein kalibriert werden. Insbesondere können somit Grate beim Stanzen bzw. Trennen des Statorblechs reduziert werden, wodurch die elektrische Maschine einen höheren Wirkungsgrad erreicht. Die Feinkalibrierung kann beispielsweise über Stanz- oder Laserschneider realisiert werden.

Ebenfalls vorteilhaft ist, wenn zum Feinkalibrieren das Sternblech und/oder das Jochblech erodiert werden. Insbesondere über die Erosion können ferner Grate entfernt werden, wodurch die Genauigkeit entsprechend erhöht werden kann. Somit kann eine Effizienzsteigerung der elektrischen Maschine realisiert werden.

Eine weitere vorteilhafte Ausgestaltungsform sieht vor, dass zum Trennen das Statorblechs gestanzt wird. Somit kann über ein Stanzverfahren die entsprechende Trennung des Statorblechs realisiert werden. Ferner kann über das Stanzverfahren auch die Feinkalibrierung durchgeführt werden. Dadurch ist es ermöglicht, dass auf einfache Art und Weise das Statorblech getrennt wird.

Ebenfalls vorteilhaft ist, wenn zum Trennen das Statorblech lasergeschnitten wird. Insbesondere kann auch über das Laserschneiden bereits die Feinkalibrierung durchgeführt werden. Somit ist es ermöglicht, dass auf einfache Art und Weise das Statorblech getrennt werden kann.

In einer weiteren vorteilhaften Ausgestaltungsform ist vorgesehen, dass das Statorblech mit zumindest zwei Materialien bereitgestellt wird. Insbesondere kann es sich bei den Materialien beispielsweise um ein erstes Material als Hauptmaterial handeln, aus welchem der Großteil des Statorblechs bereitgestellt wird. Bei dem zweiten Material kann es sich insbesondere ebenfalls um ein metallisches Material handeln, welches jedoch zum ersten Material unterschiedlich ausgebildet ist. Somit kann der Wirkungsgrad der elektrischen Maschine erhöht werden.

In einer weiteren vorteilhaften Ausgestaltungsform ist vorgesehen, dass zumindest zwischen Zahnköpfen am Sternblech ein anderes Material bereitgestellt wird als beim restlichen Statorblech. Mit anderen Worten ist beispielsweise das erste Material, aus dem der Hauptteil des Sternblechs besteht, metallisch. Zwischen den Zahnköpfen ist dann wiederum das zweite Material bereitgestellt, welches unterschiedlich zum ersten Material ausgebildet ist. Damit kann beispielsweise entsprechend der magnetischen Flüsse zwischen den Zahnköpfen verhindert werden. Ferner kann eine mechanische Festigkeit zwischen den Zahnköpfen erreicht werden, ohne dabei eine magnetische Streuung zwischen den Zahnköpfen zu verzeichnen.

Es hat sich weiter als vorteilhaft erwiesen, wenn das andere Material aus einem amagnetischen Metall bereitgestellt wird. Insbesondere mittels des amagnetischen Metalls kann somit eine hohe mechanische Festigkeit ohne magnetische Streuung zwischen den Zahnköpfen erreicht werden.

Ferner hat es sich als vorteilhaft erwiesen, wenn das Statorblech mittels eines Sinterverfahrens oder eines Druckverfahrens hergestellt wird. Insbesondere können somit einfache Statorbleche hergestellt werden, welche dann erst im nachfolgenden Schritt entsprechend angepasst werden. Dadurch kann auf einfache Art und Weise eine effizient elektrische Maschine bereitgestellt werden.

Ein weiterer Aspekt der Erfindung betrifft einen Stator, welcher durch ein Herstellungsverfahren nach dem vorhergehenden Aspekt hergestellt ist.

Ferner betrifft die Erfindung auch eine elektrische Maschine mit zumindest einem Stator nach dem vorhergehenden Aspekt und mit einem Rotor.

Ein nochmals weiterer Aspekt der Erfindung betrifft eine Herstellungsvorrichtung zum Herstellen eines Stators nach dem vorhergehenden Aspekt und zum Durchführen eines Verfahrens nach dem vorhergehenden Aspekt. Insbesondere wird das Verfahren mittels der Herstellungsvorrichtung auch durchgeführt.

Vorteilhafte Ausgestaltungsformen des Verfahrens sind als vorteilhafte Ausgestaltungsformen des Stators, der elektrischen Maschine sowie der Herstellungsvorrichtung anzusehen.

Der Stator, die elektrische Maschine sowie die Herstellungsvorrichtung weisen insbesondere gegenständliche Merkmale auf, um entsprechende Verfahrensschritte durchführen zu können.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigen:
- FIG 1: eine schematische Draufsicht auf eine Ausführungsform eines Statorblechs;
- FIG 2: eine schematische Draufsicht auf eine Ausführungsform eines Jochblechs;
- FIG 3: eine schematische Draufsicht auf eine Ausführungsform eines Sternblechs;
- FIG 4: eine schematische Draufsicht auf eine Ausführungsform eines hergestellten Stators.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

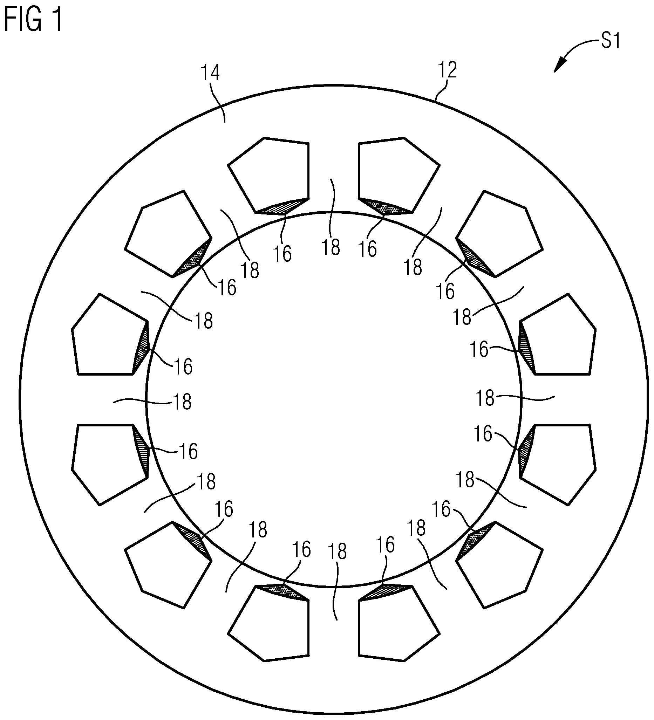

Insbesondere zeigen die Figuren 1 bis Figur 5 unterschiedliche Schritte des Herstellungsverfahrens zum Herstellen eines Stators 10 für eine nicht dargestellte elektrische Maschine.

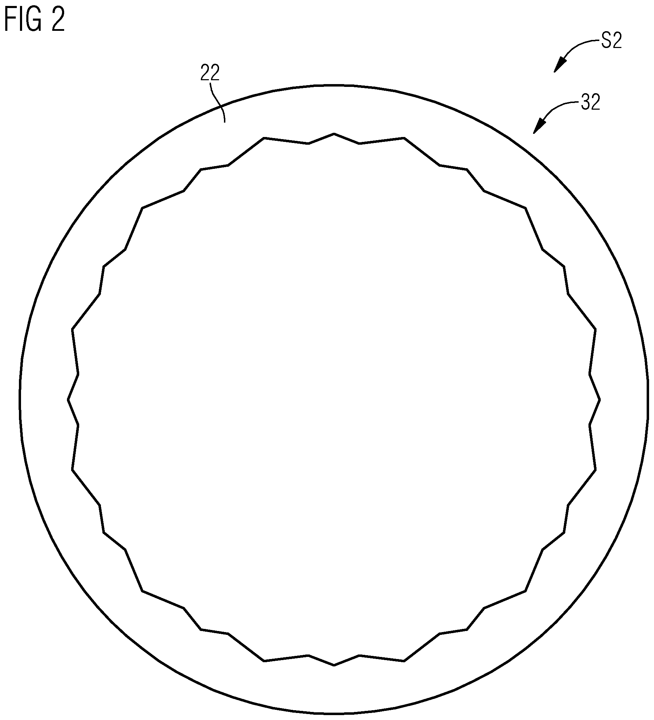

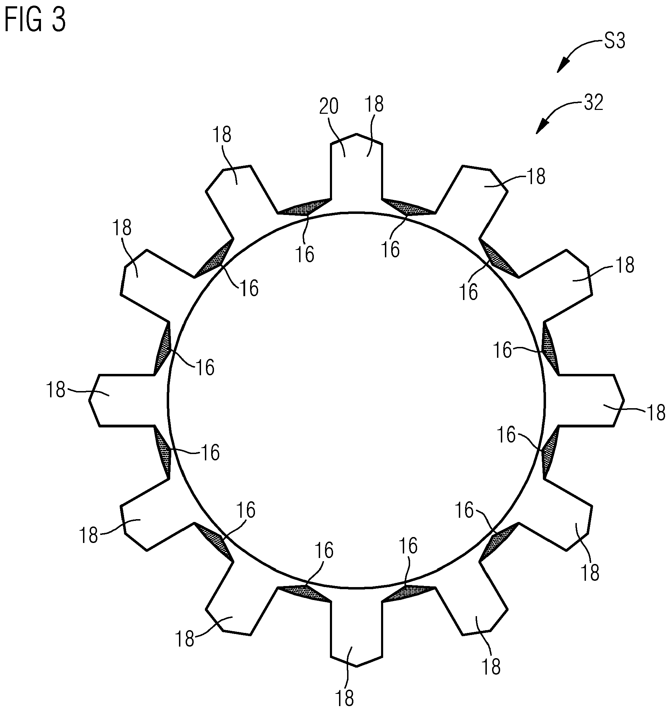

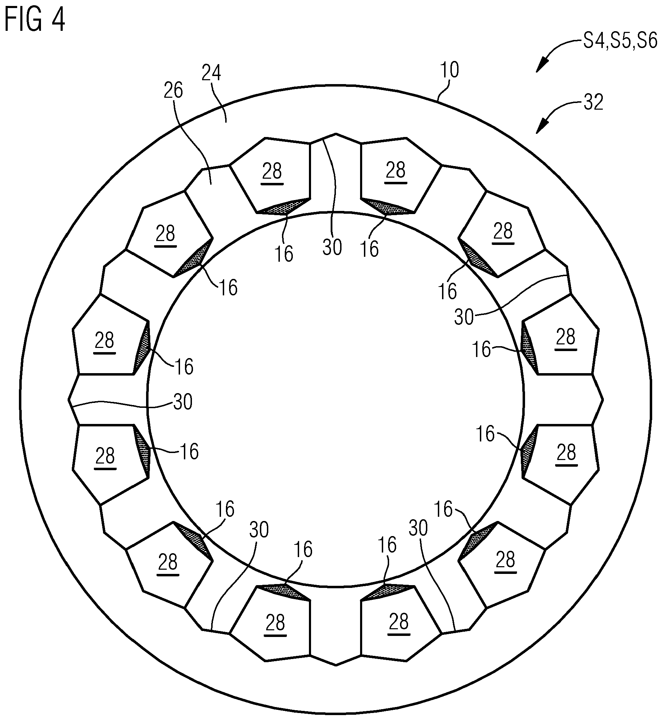

Die FIG 1 zeigt hierzu einen ersten Schritt S1, die FIG 2 zeigt einen zweiten Schritt S2, die FIG 3 zeigt einen dritten Schritt S3, und die FIG 4 zeigt drei Schritte S4, S5 und S6.

Die FIG 1 zeigt insbesondere im ersten Schritt S1, dass ein Statorblech 12 für den Stator 10 bereitgestellt werden kann. Das Statorblech 12 ist im vorliegenden Ausführungsbeispiel insbesondere mit zwei Materialien bereitgestellt. Insbesondere weist das Statorblech 12 vorliegend ein weichmagnetisches Material 14 auf mit insbesondere mehr als 98 % Eisenanteil.

Ferner ist ein amagnetisches Material 16 gezeigt, welches insbesondere zwischen jeweiligen Zahnköpfen 18 am Statorblech 12 bzw. an einem Sternblech 20 (Fig. 3) ausgebildet ist. Insbesondere weist somit das Statorblech 12 zumindest zwei unterschiedliche Materialien auf, insbesondere das weichmagnetische Material 14 sowie das amagnetische Material 16.

FIG 2 zeigt insbesondere ein abgetrenntes Jochblech 22. Insbesondere wurde das Statorblech 12 in zumindest das Sternblech 20 (FIG 3) sowie in das Jochblech 22 getrennt. So könnte beispielsweise ein Stanzverfahren, ein Laserschneidverfahren oder dergleichen angewendet werden. Dies ist insbesondere als zweiter Schritt S2 gezeigt.

In der FIG 3 ist wiederum das getrennte Sternblech 20 gezeigt. Das Sternblech 20 weist im folgenden Ausführungsbeispiel die Zahnköpfe 18 sowie das weichmagnetische Material 14 und das amagnetische Material 16 auf.

Insbesondere werden die Schritte S2 und S3 mehrfach durchgeführt. Mit anderen Worten werden mehrere Statorbleche 12 bereitgestellt, welche über ein Stanzverfahren oder Laserschneidverfahren in mehrere Sternbleche 20 und Jochbleche 22 getrennt werden.

FIG 4 zeigt dann wiederum die Erzeugung des Stators 10 insbesondere mit den weiteren Schritten S4, S5 und S6.

In den weiteren Schritten S4 erfolgt beispielsweise das Fügen der einzelnen Jochbleche 20 zu einem Jochblechpaket 24 und das Fügen der einzelnen Sternbleche 22 zu einem Sternblechpaket 26.

Im fünften Schritt S5 erfolgt das Erzeugen von Spulen 28 an dem Sternblechpaket 26. Die Spulen 28 können auch unabhängig vom Sternblechpaket 26 erzeugt werden. Es sind also zwei Möglichkeiten gegeben. Die Spulen 28 werden am Sternblechpaket 26 erzeugt oder unabhängig erzeugte Spulen 28, beispielsweise Spulenkörper gewickelt, werden auf die Statorzähne des Sternblechpakets 26 gefügt.

Im Anschluss daran erfolgt der sechste Schritt S6, wobei wiederum das Jochblechpaket 24 mit dem Sternblechpaket 26 und den Spulen 28 zum Stator 10 gefügt werden.

Insbesondere zeigt die FIG 4, dass zwischen dem Jochblechpaket 24 und dem Sternblechpaket 26 ein Spalt 30 zu verzeichnen ist. Dieser ist jedoch gemäß dem Verfahren sehr gering, wodurch bei niedrigem Drehzahlbereich hohe Drehmomente der elektrischen Maschine realisiert werden können.

Insbesondere ist ferner vorgesehen, dass die Sternbleche 20 zueinander isoliert werden. Des Weiteren sind auch die Jochbleche 22 zueinander isoliert. Des Weiteren kann vorgesehen sein, dass die Sternbleche 22 miteinander zum Sternblechpaket 26 verklebt werden. Ferner werden auch die Jochbleche 22 zum Jochblechpaket 24 miteinander verklebt.

Ferner kann vorgesehen sein, dass zeitlich nach dem Trennen das Jochblech 22 und das Sternblech 20 feinkalibriert werden. Zum Feinkalibrieren kann das Sternblech 20 und/oder das Jochblech 22 erodiert werden. Ferner kann auch ein Stanzen zum Feinkalibrieren oder ein Laserschneiden zum Feinkalibrieren vorgesehen sein.

Insgesamt zeigen somit die FIG 1 bis FIG 4, dass, um die Spalte 30 an den Fügestellen der entsprechende Statorpakete 24, 26 gering zu halten, das entsprechende Herstellungsverfahren vorgeschlagen ist. Dabei werden die Statorbleche 12 durch einen Druck- und Sinterprozess hergestellt. Vorzugsweise enthält das so hergestellte Statorblech 12 sowohl das spätere Jochblech 22 als auch das spätere Sternblech 20.

In einer speziellen Ausführungsform wird das Statorblech 12 mit den zwei Materialien hergestellt. Dabei stellt ein amagnetisches Material 16 die Verbindung zwischen den Zahnköpfen 18 her. Dadurch wird die magnetische Streuung im Betrieb des elektrischen Motors bzw. der elektrischen Maschine zwischen den Statorzähnen gering gehalten.

Die so hergestellten Jochbleche 22 und Sternbleche 20 sind bereits nahe ihrer Endkontur. In einem Kalibrierprozess, insbesondere der Feinkalibrierung, der beispielsweise beim Stanzen, Laserschneiden oder Erodieren erfolgt, werden die beiden Bleche, insbesondere das Jochblech 22 und das Sternblech 20, voneinander getrennt sowie der erforderliche Toleranzgrad, der insbesondere im Bereich von IT5 bis IT9 liegt, hergestellt.

Die Sternbleche 20 und die Jochbleche 22 werden anschließend jeweils isoliert und zu jeweiligen Blechstapeln paketiert.

Zur Herstellung des Stators 10 werden die Sternblechpakete 26 mit den Spulen 28 bestückt und anschließend wird das Jochpaket 24 über das mit Spulen bestückte Sternblechpaket 26 gefügt.

## Patentansprüche

1. Verfahren zum Herstellen eines Stators (10) für eine elektrische Maschine mittels einer Herstellungsvorrichtung (32), mit den Schritten:
- Bereitstellen eines Statorblechs (12) für den Stator (10); (S1)
- Trennen des Statorblechs (12) in zumindest ein Sternblech (20) und ein Jochblech (22) mittels der Herstellungsvorrichtung (32); (S2, S3)
- Bereitstellen von zumindest einem weiteren Statorblech (12) für den Stator (10); (S1)
- Trennen des weiteren Statorblechs (12) in zumindest ein weiteres Sternblech (20) und ein weiteres Jochblech (22) mittels der Herstellungsvorrichtung (32); (S2, S3)
- Fügen des Jochblechs (22) und des zumindest einen weiteren Jochblechs (22) zu einem Jochblechpaket (24) und Fügen des Sternblechs (20) und des zumindest einen weiteren Sternblechs (20) zu einem Sternblechpaket (26) mittels der Herstellungsvorrichtung (32); (S4)
- Bereitstellen von zumindest zwei Spulen (28) an dem Sternblechpaket (26) mittels der Herstellungsvorrichtung (32); (S5) und
- Fügen des Jochblechpakets (24) mit dem Sternblechpaket (26) mit den Spulen (28) zu dem Stator (10) mittels der Herstellungsvorrichtung (32).

2. Verfahren nach Anspruch 1, **dadurch gekennzeichnet, dass** die Sternbleche (20) zueinander isoliert werden.

3. Verfahren nach Anspruch 1 oder 2, **dadurch gekennzeichnet, dass**
die Jochbleche (22) zueinander isoliert werden.

4. Verfahren nach einem der vorhergehenden Ansprüche, **dadurch gekennzeichnet, dass**
die Sternbleche (20) miteinander verklebt werden.

5. Verfahren nach einem der vorhergehenden Ansprüche, **dadurch gekennzeichnet, dass**
die Jochbleche (22) miteinander verklebt werden.

6. Verfahren nach einem der vorhergehenden Ansprüche, **dadurch gekennzeichnet, dass**
zeitlich nach dem Trennen das Jochblech (22) und das Sternblech (20) feinkalibriert werden.

7. Verfahren nach Anspruch 6, **dadurch gekennzeichnet, dass** zum Feinkalibrieren das Sternblechblech (22) und/oder das Jochblech (20) erodiert wird.

8. Verfahren nach einem der vorhergehenden Ansprüche, **dadurch gekennzeichnet, dass**
zum Trennen das Statorblech (12) gestanzt wird.

9. Verfahren nach einem der Ansprüche 1 bis 7, **dadurch gekennzeichnet, dass**
zum Trennen das Statorblech (12) lasergeschnitten wird.

10. Verfahren nach einem der vorhergehenden Ansprüche, **dadurch gekennzeichnet, dass**
das Statorblech (12) mit zumindest zwei Materialien (14, 16) bereitgestellt wird.

11. Verfahren nach Anspruch 10, **dadurch gekennzeichnet, dass** zumindest zwischen Zahnköpfen (18) am Sternblech (20) ein anderes Material (16) bereitgestellt wird, als beim restlichen Statorblech (12).

12. Verfahren nach Anspruch 10 oder 11, **dadurch gekennzeichnet, dass**
das andere Material (16) aus einem amagnetischen Metall bereitgestellt wird.

13. Verfahren nach einem der vorhergehenden Ansprüche, **dadurch gekennzeichnet, dass**
das Statorblech (12) mittels eines Sinterverfahrens oder eines Druckverfahrens hergestellt wird.

14. Stator (10), welcher durch ein Herstellungsverfahren nach einem der Ansprüche 1 bis 13 hergestellt ist.

15. Herstellungsvorrichtung (32) zum Herstellen eines Stators (10) nach Anspruch 14 und zum Durchführen eines Verfahrens nach einem der Ansprüche 1 bis 13.
